(19) Europäisches Patentamt
European Patent Office
Office européen des brevets

(11) EP 4 610 296 A1

(12) **EUROPEAN PATENT APPLICATION**
published in accordance with Art. 153(4) EPC

(43) Date of publication:
**03.09.2025 Bulletin 2025/36**

(21) Application number: **23882632.5**

(22) Date of filing: **24.10.2023**

(51) International Patent Classification (IPC):
***C08J 5/00*** (2006.01) ***C08G 18/08*** (2006.01)
***C08G 18/44*** (2006.01) ***C08K 3/04*** (2006.01)
***C08L 75/04*** (2006.01) ***G03G 15/00*** (2006.01)
***H01B 1/24*** (2006.01)

(52) Cooperative Patent Classification (CPC):
**C08G 18/08; C08G 18/44; C08J 5/00; C08K 3/04; C08L 75/04; G03G 15/00; H01B 1/24**

(86) International application number:
**PCT/JP2023/038324**

(87) International publication number:
**WO 2024/090427 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022 JP 2022170591**
**11.10.2023 JP 2023175847**

(71) Applicant: **CANON KABUSHIKI KAISHA**
**Tokyo 146-8501 (JP)**

(72) Inventors:
- **HIRATANI, Takayuki**
  **Tokyo 146-8501 (JP)**
- **WATANABE, Masahiro**
  **Tokyo 146-8501 (JP)**
- **HINO, Tetsuo**
  **Tokyo 146-8501 (JP)**
- **OGAWA, Ryo**
  **Tokyo 146-8501 (JP)**
- **YOSHIMATSU, Nobuki**
  **Tokyo 146-8501 (JP)**

(74) Representative: **TBK**
**Bavariaring 4-6**
**80336 München (DE)**

(54) **MOLDED BODY**

(57) The present invention provides a molded body which has low compression set and low hardness, while having electrical conductivity. This molded body contains a polyurethane elastomer and a conductive filler; the polyurethane elastomer comprises a matrix that contains a specific first structure and domains that are dispersed in the matrix; the domains each contain a second structure that is different from the first structure; the conductive filler is unevenly distributed in the matrix; the parameter A indicating the viscoelasticity term of the domains and the parameter B indicating the viscoelasticity term of the matrix as determined by a viscoelastic image of a cross-section of this molded body obtained by a scanning probe microscope satisfy the relational expression $A < B$; the content ratio of the conductive filler in this molded body is 0.02% by mass to 5.0% by mass; the volume resistivity of this molded body is $1.0 \times 10^9$ Ω·cm or less; and the Young's modulus of this molded body is 0.5 MPa to 4.0 MPa.

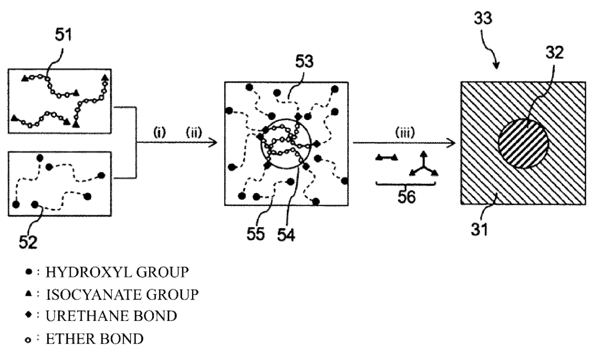


Fig. 1



Processed by Luminess, 75001 PARIS (FR)

## Description

TECHNICAL FIELD

The present disclosure relates to a molded product that contains a polyurethane elastomer and a conductive filler contained in the polyurethane elastomer.

BACKGROUND ART

Use of a conductive elastomeric material (conductive elastomer) is proposed for: sensors for detecting the magnitudes and the distributions of deformations of components, and of loads operating on components; components for electrophotography; etc. Not only flexibility (low hardness) but also quick recovery characteristics (low compression set) against deformations caused by external force, such as compression set, are demanded of a conductive elastomer in such use.

For example, PTL 1 discloses a conductive elastomer that contains a 25 to 55 vol% conductive filler to a rubber blend formed of a silicone rubber and an isoprene rubber.

PTL 2 discloses a conductive elastomer that contains a polyurethane elastomer and a conductive filler.

CITATION LIST

PATENT LITERATURE

[PTL 1] Japanese Patent Application Publication No. H02-196836
[PTL 2] Japanese Patent Application Publication No. 2014-228597

NON PATENT LITERATURE

[NPL 1] IEEE Transactions on SYSTEMS, MAN, AND CYBERNETICS, Vol. SMC-9, No. 1, January 1979, pp. 62 to 66

SUMMARY OF INVENTION

TECHNICAL PROBLEM

According to the studies of the inventors of the present invention, it was found that the conductive elastomer according to PTL 1 has a low hardness, but has a problem in achieving a low compression set because a large amount of the conductive filler is added thereto.

It was also found that the conductive elastomer according to PTL 2 has a problem in compatibility with a low hardness and a low compression set because the low hardness and the low compression set are trade-offs.

The present disclosure is aimed at the provision of a conductive molded product having a low compression set and a low hardness.

SOLUTION TO PROBLEM

One aspect of the present disclosure provides a molded product comprising

a polyurethane elastomer, and
a conductive filler comprised in the polyurethane elastomer, wherein

the polyurethane elastomer has a matrix having a first structure represented by the following formula (1), and domains dispersed in the matrix,
the domains have a second structure different from the first structure,
the conductive filler is predominantly distributed in the matrix,
relationship between a parameter A and a parameter B is A<B where the parameter A indicates a visco-elastic term of the domains and the parameter B indicates a visco-elastic term of the matrix, measured in a viscoelasticity image by a scanning probe microscope in a cross section of the molded product exposed with the domains and the matrix,

a content of the conductive filler in the molded product is 0.02 to 5.0 mass%,
a volume resistivity of the molded product is $1.0 \times 10^9$ Ω·cm or less, and
a Young's modulus of the molded product is 0.5 to 4.0 MPa:

[C1]

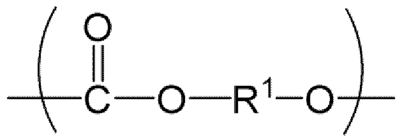

(1)

where, in the formula (1), $R^1$ represents C3-12 alkylene group.

## ADVANTAGEOUS EFFECTS OF INVENTION

At least one aspect of the present disclosure provides a conductive molded product having a low compression set and a low hardness.

## BRIEF DESCRIPTION OF DRAWINGS

[Fig. 1]
Fig. 1 is a schematic view showing a method of producing a molded product according to the present disclosure.

## DESCRIPTION OF EMBODIMENTS

In the present disclosure, unless otherwise specified, the expression of "from XX to YY" or "XX to YY" that indicates a numerical range means a numerical range including the lower limit and the upper limit which are the end points. Also, when numerical ranges are described in a stepwise manner, the upper and lower limits of each of the numerical ranges can be arbitrarily combined. In the present disclosure, for example, a description such as "at least one selected from the group consisting of XX, YY and ZZ" means any of XX, YY, ZZ, XX and YY in combination, XX and ZZ in combination, YY and ZZ in combination, and XX, YY and ZZ in combination.
Embodiments of the present disclosure will be described below. The embodiments described below are only examples, and the present disclosure is not limited to these embodiments, unless otherwise specified.
There have been some problems for obtaining a conductive molded product with a low compression set and a low hardness. The first problem arises in studies of base materials for reducing compression set while keeping hardness low. Low hardness and low compression set are basically trade-offs, and it is difficult to make low hardness and low compression set compatible with each other.
The second problem arises in achievement in both low hardness and low compression set even when adding a conductive filler that is to be added to the base material. It is necessary to add a conductive filler to the base material for imparting conductivity. However, the addition of a conductive filler increases hardness and compression set. Upon considering this effect, it is necessary to achieve both low hardness and low compression set.
For solving such problems, the inventors of the present invention have made further studies. As a result, it was found to be effective for the first problem to use, as the base material, a polyurethane elastomer to which a matrix-domain structure is introduced: the matrix-domain structure has a matrix having a structure of low compression set (capable of increasing the deformation recovery rate), and domains each having a structure that contributes to suppression of an increase in hardness.
Further, for the second problem, it was found to be effective to predominantly distribute the conductive filler in the matrix of the aforementioned matrix-domain structure in order that the addition of the conductive filler in an amount as small as possible can lead to an exhibition of conductivity. That is, it was found that the conductive filler preferentially forms conduction paths in the matrix whereby a small amount of the conductive filler can lead to an exhibition of conductivity, and thus, increases in hardness and compression set due to the addition of the conductive filler can be minimized.
From the foregoing studies, it was found to be effective in achieving all of low hardness, low compression set (fast deformation recoverability), and conductivity to predominantly distribute a small amount of a conductive filler in a matrix of a polyurethane elastomer base material that contains the matrix and domains: the matrix has a structure that allows the deformation recovery rate to increase; and the domains have a structure that contributes to suppression of increase in hardness.
A molded product according to the present disclosure contains a polyurethane elastomer and a conductive filler

contained in the polyurethane elastomer.

The polyurethane elastomer, the conductive filler, and the molded product will be described in detail below with preferred embodiments.

<Polyurethane Elastomer>

The polyurethane elastomer has a matrix that contains the first structure (polycarbonate structure) represented by the following formula (1). The polyurethane obtained by the reaction of a polyol having the first structure (polycarbonate polyol) with a polyisocyanate has strong intermolecular force among the carbonate groups. Due to this, mechanical properties such as low compression set are exhibited. However, the strong intermolecular force of the polyurethane causes hardness to increase, and therefore, the polyurethane is not suitably used for soft polyurethane elastomers.

[C2]

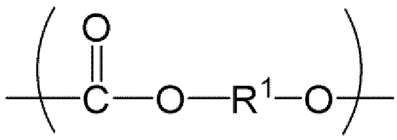

(1)

(In the formula (1), $R^1$ represents C3-12 alkylene group.)

Meanwhile, generally, a soft polyurethane elastomer having a low elasticity modulus has weak intermolecular force, and therefore, because of this, hardness can be suppressed extremely low. However, the weak intermolecular force of the polyurethane elastomer causes compression set to increase.

The polyurethane elastomer according to the present disclosure has the matrix having the first structure represented by the formula (1), and domains that are dispersed in the matrix. The domains each have the second structure that is different from the first structure. That is, in the polyurethane elastomer according to the present disclosure, the segment formed of the first structure, and the segments formed of the second structures are phase-separated from each other. Since having different structures, the two kinds of the segments are present almost without being miscible with each other to form a matrix-domain structure.

Such a clear phase separation prevents the segments formed of the second structures from being included in the matrix whereby, in the polyurethane elastomer according to the present disclosure, low compression set caused by the first structure represented by the formula (1) is achieved because of the matrix. The matrix has at least one, preferably a plurality of the polycarbonate structure(s) represented by the formula (1). When the matrix has a plurality of the polycarbonate structures represented by the formula (1), these polycarbonate structures can be each a repeating structural unit.

When the polyurethane elastomer forms the matrix-domain structure, at least part of the outer surface of the molded product may be formed of the matrix. For example, all the outer surface of the molded product may be formed of the matrix.

The domains each have the second structure that is different from the first structure, and the elasticity modulus of the domains is designed to be lower than that of the matrix. With such a configuration, low compression set can be achieved in the polyurethane elastomer while hardness is kept low.

That is, in the polyurethane elastomer, the matrix is configured to function to achieve low compression set, and the domains are configured to function to achieve low hardness. As the above, the matrix and the domains are configured to function differently from each other whereby low compression set and low hardness can be achieved at higher levels in the molded product according to the present disclosure.

The first structure of the matrix in the molded product, which has the polycarbonate structure represented by the formula (1), will be described. $R^1$ in the formula (1) represents C3-12 alkylene group. $R^1$ preferably represents C3-9 alkylene group, and more preferably represents C3-6 alkylene group. $R^1$ is also preferably C6-9 alkylene group.

$R^1$ being C3-12 alkylene group, low miscibility with the segments formed of the second structures is easily ensured, and the matrix can be clearly phase-separated from the domains. $R^1$ being C3-9 alkylene group, the intermolecular forces among the carbonate groups can be properly suppressed, and excellent friction properties, and both high wear resistance and low hardness can be achieved, which is more preferable.

Examples of $R^1$ include: $-(CH_2)_m-$ (m=3 to 12 (preferably 3 to 9, more preferably 3 to 6 or 6 to 9)); $-CH_2C(CH_3)_2CH_2-$; $-CH_2CH(CH_3)CH_2-$; and - $(CH_2)_2CH(CH_3)(CH_2)_2-$. In the polyurethane elastomer, $R^1$'s may be all the same, or different $R^1$'s may be combined.

The number average molecular weight (Mn) of the polycarbonate structure represented by the formula (1) is preferably from 500 to 10000 as a repeating unit in the polyurethane elastomer. This number average molecular weight is

based on the raw polycarbonate polyol. The number average molecular weight is more preferably from 700 to 8000. When the number average molecular weight is 500 or more, low miscibility with the polyurethane segments having the second structures is ensured, and the phase separation of the matrix from the domains is more clarified. Further, when the number average molecular weight is set to 10000 or less, the increase in viscosity of the polycarbonate polyol as the raw material can be suppressed.

All the number average molecular weights of the aforementioned polycarbonate structure, and the undermentioned polyols etc. are/were calculated in terms of polystyrene standard molecular weight, or using hydroxyl values (mgKOH/g) and valences.

The number average molecular weight in terms of polystyrene molecular weight can be measured using high performance liquid chromatography. The measurement can be performed using high-speed GPC equipment, "HLC-8220 GPC" manufactured by Tosoh Corporation with two columns of Shodex GPCLF-804 (exclusion limit: $2\times10^6$, separation range: 300 to $2\times10^6$) in series.

When the hydroxyl value and the valence are used, the number average molecular weight can be calculated by the following equation. For example, the number average molecular weight of a polyol of 56.1 mgKOH/g having a valence of 2 can be calculated as 2000.

The number average molecular weight = 56.1 $\times$ 1000 $\times$ the valence/the hydroxyl value

The second structure of the domains in the molded product, which is different from the first structure represented by the formula (1), will be described. The elasticity modulus of the domains containing a polyurethane having the second structure is designed to be lower than that of the matrix. The second structure is not particularly limited as long as the foregoing relationship between the elasticity moduli is satisfied, and domains phase-separated from the matrix having the first structure can be formed.

An example of such a second structure is the polyether structure represented by the following formula (2). $R^2$ represents C3-6 alkylene group. $R^2$ is preferably C3-5 alkylene group having a branched structure, and more preferably C3-4 alkylene group having a branched structure.

$R^2$ being C3-6 alkylene group, low miscibility with the polyurethane segment having the polycarbonate structure represented by the formula (1) is ensured, and the matrix can be more clearly phase-separated from the domains. When $R^2$ is C3-5 alkylene group having a branched structure, the intermolecular force among the ether groups is suppressed extremely low, and low hardness is more easily achieved.

The domains each preferably have at least one, more preferably a plurality of the polyether structure(s) represented by the formula (2). When the domains each have a plurality of the polyether structures represented by the formula (2), these polyether structures can be each a repeating structural unit.

Examples of $R^2$ include: $-(CH_2)_m-$ (m=3 to 6 (preferably 3 to 5, more preferably 3 to 4)); $-CH_2CH(CH_3)-$; $-CH_2C(CH_3)_2CH_2-$; $-CH_2CH(CH_3)CH_2-$; $-(CH_2)_2CH(CH_3)CH_2-$; and $-(CH_2)_2CH(CH_3)(CH_2)_2-$. **In** the polyurethane elastomer, $R^2$'s may be all the same, or different $R^2$'s may be combined.

[C3]

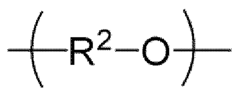

(2)

(In the formula (2), $R^2$ represents C3-6 alkylene group.)

The number average molecular weight (Mn) of the polyether structure represented by the formula (2) is preferably from 1000 to 50000 as a repeating unit in the polyurethane elastomer. This number average molecular weight is based on the raw polyether polyol. The number average molecular weight is more preferably from 1200 to 30000.

The number average molecular weight being 1000 or more, low miscibility with the polyurethane segment having the polycarbonate structure represented by the formula (1) is ensured, and the phase separation of the matrix from the domains can be more clarified. The number average molecular weight being 50000 or less, the segments having the polyether structures easily form the domains, and the phase-separated structure can be further stabilized.

In the polyurethane elastomer, as described above, the elasticity modulus of the domains that contain polyurethane having the second structure is designed to be lower than that of the matrix. Specifically, parameter A indicating the visco-elastic term of the domains, and parameter B indicating the visco-elastic term of the matrix are set: these visco-elastic terms are measured in a viscoelasticity image of a cross section that is formed of exposures of the domains and the matrix; and the viscoelasticity image is obtained with a scanning probe microscope. At this time, the parameters A and B satisfy A<B.

The difference in relative elasticity modulus between the matrix and the domains in the polyurethane elastomer can be measured by flaking to observe the polyurethane elastomer with a scanning probe microscope (SPM/AFM). As the scanning probe microscope, "S-Image" (trade name) manufactured by Hitachi High-Tech Corporation can be used.

Examples of flaking means include sharp razors, microtomes, and the focused ion beam method (FIB). In the present disclosure, a microtome is used. Three slices in total are prepared, a 50 μm square viewing region is arbitrarily selected, and the viscoelasticity images are observed in the three viewing regions in total.

A viscoelastic dynamic force mode (VE-DFM) shall be used as a measurement mode for the viscoelasticity images with the SPM. As a cantilever, a silicon microcantilever for DFM ("SI-DF3" (trade name) manufactured by Hitachi High-Tech Corporation, spring constant: 1.9 N/m) is used. Furthermore, the scanning frequency is set to 0.5 Hz.

The VE-DFM (viscoelastic DFM) is a mode of measuring viscoelasticity distributions at the same time when obtaining images of the surface profile while controlling the distance between a probe and a sample so that the vibration amplitude of the cantilever in a resonating state is fixed. In the VE-DFM, the viscoelasticity distribution is imaged from the deflection amplitude of the cantilever when the sample is micro-vibrated in the Z direction to apply periodic force. When the sample is hard, the amplitude of the cantilever increases because of a minor deformation of the sample; and when the sample is soft, the deformation vibration of the sample is induced, and the amplitude of the cantilever decreases.

The obtained amplitude is converted in terms of mV as a displacement, which is the parameter indicating the visco-elastic term. Accordingly, the parameters A and B are the indexes showing the relationship of hardness between the domains and the matrix that are present in one of the samples. It is noted that in the VF-DFM, the magnitude of the amplitude of the cantilever is outputted as a voltage, and thus, the units of the parameters A and B are mV. In addition, a larger value of the parameter shows higher elasticity.

After the viscoelasticity images are obtained, ten parameters indicating the visco-elastic terms of the matrix, and ten parameters indicating those of the domains are obtained from each of the viewing regions, and the arithmetic mean values of these parameters of the matrix and the domains shall be used as the parameter A indicating the visco-elastic term of the domains, and the parameter B indicating the visco-elastic term of the matrix. The measurement procedures will be described later.

The value of the ratio (A/B) of the parameter A with respect to the parameter B is preferably 0.65 or less. This value is more preferably 0.05 to 0.50, further preferably 0.05 to 0.40, much more preferably 0.10 to 0.30, and particularly preferably 0.12 to 0.20. The lower the A/B is, the larger the difference in viscoelasticity between the matrix and the domains is, and thus, the easier achievement in both hardness, and recovery from the deformation is.

The parameters A and B can be adjusted by, for example, the elasticity moduli of the domains and the matrix. The elasticity modulus of the matrix can be increased, for example, by using a trimer compound or a multimer compound of a polyisocyanate as a raw material for forming the matrix to increase the crosslink density of the matrix. The elasticity modulus of the domains is decreased by, for example, increasing the molecular weight of the polyether polyol as the raw material for forming the domains to decrease the crosslink density of the domains.

The ratio of the areas of the matrix with respect to the domains (the matrix/the domains) that are observed in a 50 μm×50 μm viewing region in the cross section formed of exposures of the domains and the matrix is preferably 50/50 to 85/15. The ratio is more preferably 55/45 to 80/20, and further preferably 60/40 to 75/25. If the ratio of the area of the matrix is 50% or more, the phase-separated morphology tends to stabilize, which easily leads to more stable formation of the matrix and the domains. When the ratio of the area of the matrix is 85% or less, both low hardness and conductivity tend to be easily achieved.

The foregoing ratio of the areas can be controlled by the amount of the materials of the domains and the matrix to be used.

The arithmetic mean value (mean diameter) of the circle-equivalent diameters of the domains observed in the cross section formed of exposures of the domains and the matrix is preferably 0.2 to 30.0 μm. This arithmetic mean value is more preferably 0.5 to 20.0 μm, further preferably 1.0 to 7.0 μm, and much more preferably 1.5 to 5.0 μm. The circle-equivalent diameter being 0.2 μm or more, low hardness is more easily achieved; and the circle-equivalent diameter being 30.0 μm or less, the phase-separated morphology further stabilizes.

The circle-equivalent diameters of the domains can be controlled, for example, by changing the isocyanate index in the undermentioned step of obtaining the first urethane prepolymer. Specifically, the circle-equivalent diameters are easily increased by decreasing the isocyanate index, and easily decreased by increasing the isocyanate index. The circle-equivalent diameters of the domains can also be controlled by the material to be used and the molecular weight of the domains, and shearing force that is applied when the material of the matrix is mixed.

The ratio of the areas of the matrix/the domains, and the mean diameter of the domain are calculated from a cross-sectional image of the urethane elastomer that is obtained using a scanning probe microscope. This will be specifically described later.

The chemical structures of the components contained in the matrix and the domains can be analyzed using, for example, a spectrometer such as an AFM infrared spectrometer, a microinfrared spectrometer, and a micro-Raman spectrometer, or a mass spectrometer.

Further, the proportion of the number of domains having a circularity of 0.60 to 0.95 to the total number of the domains is preferably 70% by number or more when the three 50 μm square viewing regions are put on the cross section of the molded product and observed. This proportion is more preferably 80% by number to 99% by number, and further preferably 85% by number to 95% by number.
When domains having a circularity within the above range recover from deformation, the anisotropy in the direction where the shapes of the domains recover is less likely created. The number (proportion) of domains having a circularity within the above range being large, the anisotropy is much less likely created upon recovery from deformation. **In** other words, the molded product can be configured in such a manner that recovery from deformation thereof is more isotropic, and as a result, creases, distortion, etc. due to anisotropy in recovery from deformation are less likely formed after the recovery from the deformation.
The proportion of the numbers can be adjusted, for example, by the rate of injecting the material into a mold. As the injection rate is decreased, the shearing force applied to the material is also decreased, and the material can be heat-set while high circularity is maintained.

<Conductive Filler>

The conductive filler is added for the purpose of imparting conductivity. However, in general, addition of a conductive filler to an elastomeric material leads to significant increased hardness, and increased compression set. In contrast, in the molded product according to the present disclosure, the conductive filler is predominantly distributed in the matrix to form conduction paths, and the conductive filler is prevented from being included in the domain as much as possible.
This allows, in the molded product according to the present disclosure, a smaller amount of the conductive filler to impart conductivity than a normal uniform material that has no matrix-domain structure. Therefore, low compression set and low hardness can be achieved at the same time when conductivity is imparted following such addition of the conductive filler.
The conductive filler can be used without any particular limitation as long as exhibiting conductivity. Examples of the conductive filler include: solid carbons such as carbon black, graphite, carbon nanotubes, fullerene, graphene, and carbon nanowalls; powders of metals such as silver, copper, aluminum, nickel, and iron; conductive metal oxides such as conductive tin oxides, and conductive titanium oxides; and inorganic ionic materials such as lithium perchlorate, sodium perchlorate, and calcium perchlorate. One of them may be used alone, or two or more of them may be used in combination.
Among them, from the viewpoint that conductivity can be imparted by addition in a small amount, solid carbons such as carbon black, graphite, carbon nanotubes, fullerene, graphene, and carbon nanowalls are preferable. More preferably, conductive carbon black such as furnace black, thermal black, acetylene black, Ketjenblack, PAN (polyacrylonitrile)-based carbon, and pitch-based carbon is preferable because resistance is easily adjusted in a desired range by suitably selecting the particle size, the structure, etc. Carbon nanotubes are preferable from the viewpoint that conductivity can be imparted by addition in an extremely small amount.
As a conductive carbon black as used herein, DENKA BLACK manufactured by Denka Company Limited, Ketjenblack Series manufactured by Lion Corporation, NIPex 160 IQ manufactured by Orion Engineered Carbons GmbH, etc. are preferable. Examples of Ketjenblack Series as used herein include Ketjenblack EC600JD, Ketjenblack EC300J, carbon ECP, and carbon ECP600JD.
Percolation theory can describe the mechanism for exhibiting conductivity caused by the conductive filler, and there are the following tendencies: when the filling rate of the conductive filler is low, electroconductivity does not change; but when the filling rate thereof exceeds a certain critical filling rate, the conductive filler forms conduction paths aligning at predetermined intervals or less to lead to a sudden rise in electroconductivity (drop in volume resistivity), and thereafter, the electroconductivity reaches a constant value.
In the molded product according to the present disclosure, the conductive filler is predominantly distributed in the matrix. Specifically, the total area of the conductive filler per 30 μm×30 μm viewing region that is observed in the cross section formed of exposures of the domains and the matrix is defined as a content C. The total area of the conductive filler included in the matrix in the 30 μm×30 μm viewing region is defined as a content D. The value of the ratio D/C of the content D with respect to the content C is D/C≥0.70.
Preferably, D/C≥0.80, and more preferably, D/C≥0.90. The upper limit is not particularly limited, but preferably, D/C≤1.00. When the relationship between the contents C and D of the conductive filler is D/C≥0.70, the effect of blocking the function of lowering hardness that is due to inclusion of the conductive filler into the domains is reduced, and it becomes easier to achieve both low hardness and conductivity.
D/C can be increased by, for example, increasing the dispersibility of the conductive filler and the material of the matrix to be used. In addition, for example, D/C can be reduced by increasing the dispersibility of the conductive filler and the material of the domains to be used. Specifically, D/C can be increased by reducing the amount of the hydrophilic functional groups on the surface of the conductive filler. For example, D/C is easily increased, for example, by decreasing

the carboxy groups of carbon black so that the hydrophobicity of the surface of the conductive filler is close to that of the matrix. D/C can be reduced by increasing the amount of the hydrophilic functional groups on the surface of the conductive filler.

The method of measuring the contents C and D of the conductive filler will be described later.

The content of the conductive filler in the molded product is 0.02 to 5.0 mass% based on the mass of the molded product. When the content of the conductive filler is 0.02 mass% or more, conductivity can be imparted to the molded product. When the content of the conductive filler is 5.0 mass% or less, conductivity, low hardness, and low compression set can be all achieved.

The content of the conductive filler is preferably 0.05 to 4.5 mass%, and more preferably 0.1 to 4.0 mass%.

Specifically, when the conductive filler is carbon black having a specific surface area of less than 500 $m^2/g$ (e.g., DENKA BLACK manufactured by Denka Company Limited), the content thereof is preferably 1.0 to 4.5 mass%, and more preferably 1.5 to 4.0 mass%. When the conductive filler is carbon black having a specific surface area of 500 $m^2/g$ or more (e.g., Ketjenblack Series manufactured by Lion Corporation), the content thereof is preferably 0.2 to 4.0 mass%, and more preferably 0.5 to 3.5 mass%. When the conductive filler is a tube-shaped carbon fiber (carbon nanotube) or a needle-shaped carbon fiber (carbon nanofiber) (e.g., a single wall carbon nanotube (TUBALL (registered trademark)) manufactured by OCSiAl) having a specific surface area of 500 $m^2$ or more, the content thereof is preferably 0.05 to 3.0 mass%, and more preferably 0.1 to 2.5 mass%.

When the conductive filler is a solid carbon, the content thereof can be calculated using a thermogravimetry/differential thermal analyzer (TG-DTA).

Specifically, the measurement is performed according to the following procedures.

Using TG-DTA, the temperature of a sample that is put in a predetermined vessel is raised to 600°C at the temperature rising rate of 10°C/min in a nitrogen atmosphere, held for 10 min, and thereafter, cooled to 400°C at the cooling rate of 10°C/min, and the weight loss W1 (%) from the start of the measurement is measured. Then, the temperature of the sample is raised again to 800°C at the temperature rising rate of 10°C/min in an air atmosphere, and the weight loss W2 (%) from the start of the measurement is measured. The content of the conductive filler (solid carbon) can be calculated as the difference between W2 and W1 (W2-W1 (%)).

<Molded Product>

The volume resistivity of the molded product at 23°C is $1.0\times10^9\Omega\cdot cm$ or less. The volume resistivity of $1.0\times10^9\Omega\cdot cm$ or less means that the molded product has excellent conductivity.

The volume resistivity is preferably $1.0\times10^8\Omega\cdot cm$ or less, and more preferably $1.0\times10^6\Omega\cdot cm$ or less. The lower the volume resistivity is, the more preferable. The lower limit is not particularly limited, but is preferably $1.0\times10^1\Omega\cdot cm$ or more.

The volume resistivity is preferably $1.0\times10^1$ to $1.0\times10^9\Omega\cdot cm$, $1.0\times10^1$ to $1.0\times10^8\Omega\cdot cm$, or $1.0\times10^1$ to $1.0\times10^6\Omega\cdot cm$.

The volume resistivity can be measured using a digital ultra-high resistance/micro current meter R8340A (manufactured by ADVANTEST CORPORATION) by placing the molded product on a sample holder SH2-Z (manufactured by TOYO Corporation), and applying a direct current of 1 to 50 V.

The volume resistivity can be controlled by the amount of the conductive filler, and the amount of the material of the domains and the material of the matrix to be used (the ratio of the areas of the matrix to the domains).

The Young's modulus of the molded product at 23°C is 0.5 to 4.0 MPa. The Young's modulus within this range facilitates achievement in low hardness, and allows flexible deformation corresponding to external force such as compression and tension.

This Young's modulus is preferably 0.8 to 3.5 MPa, and more preferably 1.0 to 2.5 MPa. The Young's modulus can be measured by performing a tensile test by the use of a universal tensile testing machine (manufactured by Orientec Corporation, product name: TENSILON RTF-1250).

The Young's modulus can be controlled by the amount of the conductive filler, and the amount (the ratio of the areas of the matrix to the domains), the chemical structures, and the crosslink densities of the material of the domains and the material of the matrix to be used.

In the temperature-loss tangent (tanδ) curve obtained by dynamic viscoelasticity measurement (DMA) of the molded product, preferably, there are two or more peaks derived from glass transition observed in the temperature range of -80°C to +20°C. More preferably, there are two or more peaks derived from glass transition observed in the temperature range of -70°C to 0°C. Further preferably, there are two or more peaks derived from glass transition observed in the temperature range of -70°C to -10°C.

The peak positions within any of the above ranges indicate that the polyurethane segment having the first structure represented by the formula (1), and the polyurethane segments having the second structures represented by the formula (2) are more clearly phase-separated from each other via the interfaces of the matrix and domains.

The positions of the peaks derived from glass transition can be controlled by the chemical structures and the molecular weights of the material of the domains and the material of the matrix to be used.

Furthermore, in the temperature-tan$\delta$ curve obtained by DMA of the molded product, preferably, at least one of the peaks derived from glass transition is observed in a temperature range of -50°C or lower (preferably -80°C to -50°C). Meanwhile, preferably, at least one of the peaks is within a temperature range of -40°C or higher (preferably -40°C to 20°C). More preferably, at least one of the peaks is within a temperature range of -60°C or lower (more preferably -70°C to -60°C), and at least one of the peaks is within a temperature range of -35°C or higher (more preferably -35°C to -10°C).

Generally, the peak derived from glass transition of the second structure represented by the formula (2) is observed in the temperature range of -80°C to -50°C or lower. Further, the peak derived from glass transition of the polyurethane segment having the first structure represented by the formula (1) is observed in the temperature range of -40°C to +20°C or lower. Thus, the peaks derived from glass transition within the foregoing two temperature ranges mean the following.

**In** the molded product, the segment formed of the first structure and the segments formed of the second structures are phase-separated from each other. The two kinds of the segments are present almost without being miscible with each other to form a matrix-domain structure. Such a clear phase separation prevents the segments formed of the second structures from being included in the matrix. Because of this, in the molded product according to the present disclosure, low compression set is achieved through the matrix although the molded product has low hardness.

The molded product according to the present disclosure is not particularly limited, but can be synthesized, for example, by the method including the following steps (i) to (iii):

step (i): reacting the first urethane prepolymer having at least one (preferably at least two) isocyanate group(s) with the first polycarbonate polyol having at least two hydroxyl groups to obtain the second urethane prepolymer having at least two hydroxyl groups;

step (ii): mixing the second urethane prepolymer, the conductive filler, and the second polycarbonate polyol (which may be an unreacted excess of the first polycarbonate polyol) to obtain a dispersion formed by dispersing droplets containing at least part of the second urethane prepolymer throughout the second polycarbonate polyol containing the conductive filler; and

step (iii): preparing a mixture for forming the molded product which contains: the dispersion; and a polyisocyanate having at least two isocyanate groups, and then, reacting the second urethane prepolymer, the second polycarbonate polyol, and the polyisocyanate which are in the mixture to form the molded product of the polyurethane elastomer.

One embodiment of the aforementioned method of producing the molded product according to one aspect of the present disclosure will be described with reference to Fig. 1 (not showing the conductive filler). The method of producing the molded product according to the present disclosure is not limited to this embodiment.

In the step (i), a first urethane prepolymer 51 having at least one (preferably at least two) isocyanate group(s), and a first polycarbonate polyol 52 having at least two hydroxyl groups are mixed. Next, the isocyanate group(s) and the hydroxyl groups in the obtained mixture are reacted in the presence of a curing catalyst to link both kinds of groups via urethane bonds whereby a second urethane prepolymer 53 having at least two hydroxyl groups is obtained.

In Fig. 1, a polyether having two isocyanate groups is shown as an example of the first urethane prepolymer 51. An example of the first urethane prepolymer 51 is a urethane prepolymer having the second structure, and a preferred example thereof is a reaction product of a polyol and a polyisocyanate, such as a polyether diol.

In the step (ii), a dispersion formed by dispersing droplets containing at least part of the second urethane prepolymer throughout the second polycarbonate polyol containing the conductive filler is obtained. Here, the second urethane prepolymer can be mixed with the second polycarbonate polyol, which is newly added in this step. The unreacted excess of the first polycarbonate polyol in the step (i) can also be used as the second polycarbonate polyol.

The first urethane prepolymer 51 contained in the second urethane prepolymer 53 is not miscible with the second polycarbonate polyol 55, but forms droplets 54.

On the contrary, the first polycarbonate polyol 52 contained in the second urethane prepolymer 53 is miscible with the second polycarbonate polyol 55. Thus, the droplets 54 containing the first urethane prepolymer 51 which constitutes part of the second urethane prepolymer 53 are uniformly and stably dispersed throughout the second polycarbonate polyol 55 via the first polycarbonate polyol 52. As a result, the dispersion formed by dispersing the droplets 54 containing the first urethane prepolymer 51 (second structure) throughout the second polycarbonate polyol 55 is obtained.

In order to disperse the conductive filler throughout the matrix, the conductive filler may be dispersed throughout the second polycarbonate polyol 55 in advance before the step (ii). In the step (ii), the conductive filler is preferably dispersed throughout the second polycarbonate polyol 55. In the second urethane prepolymer formed in the step (i), the interfaces are formed by the urethane bonds of the droplets 54, which can be the domains later, and the conductive filler is difficult to enter the droplets 54.

Alternatively, between the steps (ii) and (iii), the conductive filler may be added. The conductive filler is well

dispersed throughout the matrix. Because the interfaces between the matrix and the domains are rigidly formed via the chemical bonds (urethane bonds), a large amount of the conductive filler does not enter the domains even when the conductive filler is added and stirred after the step (ii).

For description, the steps (i) and (ii) are separately described, but these steps may be a series of successive steps.

In the step (ii), the second polycarbonate polyol 55 where the droplets 54 are dispersed may be an unreacted excess of the first polycarbonate polyol used in the step (i) that is not reacted with the first urethane prepolymer. That is, in the step (i), an excessive amount of the first polycarbonate polyol is used for the first urethane prepolymer whereby the dispersion, described in the step (ii), formed by dispersing the second urethane prepolymer 53 throughout excess of the first polycarbonate polyol (that is, the second polycarbonate polyol 55) can be obtained.

Even when an excessive amount of the first polycarbonate polyol is used, the polycarbonate polyol (second polycarbonate polyol) as a dispersion medium for the second urethane prepolymer may be added additionally. In this case, the chemical composition of the additional polycarbonate polyol may be the same or different from that of the first polycarbonate polyol used in the step (i).

On the contrary, when equivalent amounts of the first polycarbonate polyol and the first urethane prepolymer are reacted in the step (i), and all the first polycarbonate polyol has been consumed, a new polycarbonate polyol is used as the second polycarbonate polyol in the step (ii) to prepare the dispersion. Also in this case, the chemical composition of the polycarbonate polyol used as the second polycarbonate polyol may be the same or different from that of the first polycarbonate polyol.

Finally, in the step (iii), a mixture for forming the molded product that contains: the dispersion prepared in the step (ii); and a polyisocyanate 56 having at least two isocyanate groups is prepared. Then, the terminal hydroxyl groups of the second urethane prepolymer 53, the hydroxyl groups of the second polycarbonate polyol 55, and the isocyanate groups of the polyisocyanate 56 which are in the mixture are reacted.

Thus, a network structure via urethane bonds is formed, and the mixture for forming the molded product is cured to obtain the molded product according to the present disclosure. A molded product 33 that is obtained in such a manner has a matrix-domain structure formed by dispersing domains 32 each having a structure derived from the first urethane prepolymer 51, i.e., the second structure throughout a matrix 31 containing a urethane elastomer having a polycarbonate structure derived from the first polycarbonate polyol 52 and the second polycarbonate polyol 55, i.e., the first structure.

Further, the molded product 33 contains the conductive filler, and the conductive filler is predominantly distributed in the matrix 31. The domains 32 are each mainly composed of the second structure, and the insides of the domains can be configured to have substantially no cross-linked structure. In other words, the domains 32 can be configured to be present in the matrix in an almost liquid state. This allows the domains to have a low elasticity modulus in the molded product 33 according to the present disclosure.

Furthermore, not just the liquid portion of the domains is enclosed in the matrix, but the domains and the matrix are chemically bonded via urethane bonds at the boundaries between the domains and the matrix. Therefore, recovery of domains from the deformation when the load applied to the molded product 33 is removed can be linked with recovery of the matrix from the deformation.

That is, the domains almost in the form of liquid substantially have no cross-linked structure, for example, thereinside. Therefore, it is difficult that domains that deform due to the application of a load to the molded product 33 autonomously recover from the deformation. However, in the molded product according to the present disclosure, the domains and the matrix are chemically bonded (urethane-bonded) at the boundaries between the domains and the matrix whereby the domains can recover from the deformation together with recovery of the matrix from the deformation. According to this, stable deformation (deformation amount) and stable recovery from the deformation can be achieved even when loads are repeatedly applied to and removed from the molded product 33.

The above steps (i) and (ii) are the steps of stably dispersing the polyol having the second structure which is originally low in miscibility and difficult to be stably and uniformly dispersed throughout a polyol having the first structure. That is, the first urethane prepolymer 51 is reacted with the first polycarbonate polyol 52 to form the second urethane prepolymer 53.

This makes it possible to obtain the dispersion formed by stably and uniformly dispersing the segment of the polyol derived from the first urethane prepolymer 51 throughout the second polycarbonate polyol. This makes it easy to produce the molded product 33 which is formed by dispersing the domains 32, which have a high circularity, a small size of the order of magnitude of micrometers, and a relatively uniform size distribution, throughout the matrix 31.

An example of other methods of mixing materials that are low miscible with each other is a mixing and dispersing method with high shearing force. However, according to this method, high shearing force is applied to the polyol having the second structure, and as a result, the shapes of the domains deform to reduce the circularity, and the sizes of the domains may also be nonuniform. **In** addition, the dispersion state is unstable, and the agglomeration of the domains progresses in a relatively short time.

Further, the non-miscibility of the polyol having the second structure with the polyol having the first structure is not

ensured, and the phase separation of the matrix from the domains in the resulting polyurethane elastomer becomes unclear. Therefore, it is difficult to obtain the molded product according to the present disclosure, which can provide a flexible elastic body excellent in recoverability from deformation.

The amounts of the uses of the polyol having the second structure and the polyol having the first structure are not particularly limited, and may be amounts that allows the droplets 54 to be dispersed throughout the second polycarbonate polyol 55 to form clear domains. For example, the polyol having the second structure: the polyol having the first structure is, on the basis of the mass, preferably 15: 85 to 50: 50, and more preferably 20: 80 to 50: 50.

The first urethane prepolymer has at least one isocyanate group, and has the second structure; and preferably, has at least one isocyanate group, and the polyether structure having the structure represented by the formula (2). The first urethane prepolymer can be obtained, for example, by the following steps:

a polyether polyol having at least two hydroxyl groups, and having the structure represented by the formula (2) is reacted with the polyisocyanate having at least two isocyanate groups.

Examples of the polyether polyol include: alkylene structure-containing polyether-based polyols such as polypropylene glycol, polytetramethylene glycol, copolymers of tetrahydrofuran and neopentyl glycol, and copolymers of tetrahydrofuran and 3-methyltetrahydrofuran; and random or block copolymers of these polyalkylene glycols. One of them may be used alone, or two or more of them may be used in combination.

Among the polyether polyols, amorphous polyether polyols are preferable from the viewpoint on probable achievement in low miscibility with the second polycarbonate polyol described later, and low hardness. More preferably, among the polyether polyols, at least one selected from polypropylene glycol, copolymers of tetrahydrofuran and neopentyl glycol, and copolymers of tetrahydrofuran and 3-methyltetrahydrofuran is contained. Further preferably, at least polypropylene glycol is contained.

The number average molecular weight of the polyol having the second structure is preferably from 1000 to 50000. More preferably, this number average molecular weight is from 1200 to 30000. When the number average molecular weight is 1000 or more, low miscibility with the polycarbonate polyol is ensured, and the phase separation of the matrix from the domains in the resulting urethane elastomer is more clarified. When the number average molecular weight is 50000 or less, the polyurethane segment derived from the polyether polyol tends to easily form the domains, and the phase-separated morphology is more stabilized.

Examples of the polyisocyanate to be reacted with the polyol having the second structure include: pentamethylene diisocyanate; hexamethylene diisocyanate; isophorone diisocyanate; 2,4-tolylene diisocyanate; 2,6-tolylene diisocyanate; xylylene diisocyanate; diphenylmethane diisocyanate; trimer compounds (isocyanurates) or multimer compounds of these polyisocyanates; allophanate-type polyisocyanates; biuret-type polyisocyanates; and water-dispersible polyisocyanates. One of these polyisocyanates may be used alone, or two or more of them may be used in combination.

Among the above-exemplified polyisocyanates, a bifunctional isocyanate (diisocyanate) having two isocyanate groups is preferable because of high miscibility with the polyol having the second structure, and easiness in adjustment of physical properties such as viscosity. More preferably, among the aforementioned polyisocyanates, at least one selected from hexamethylene diisocyanate, isophorone diisocyanate, 2,4-tolylene diisocyanate, 2,6-tolylene diisocyanate, xylylene diisocyanate, and diphenylmethane diisocyanate is contained. Xylylene diisocyanate is further preferable.

**In** the step of reacting the polyol having the second structure with the polyisocyanate to obtain the first urethane prepolymer, the isocyanate index is preferably 0.05 to 8.0. This isocyanate index is more preferably 0.1 to 5.0. The isocyanate index within this range can lead to reduction of components derived from the first urethane prepolymer that are not in the network structure and remain, and suppress liquid materials oozing from the polyurethane elastomer.

The isocyanate index indicates the ratio ([NCO]/[OH]) of the number of moles of the isocyanate groups in the isocyanate compound to the number of moles of the hydroxyl groups in the polyol compound.

The first urethane prepolymer obtained by the reaction of the polyol having the second structure with the polyisocyanate has a linking structure via the urethane bonds by the reaction of the hydroxyl groups with the isocyanate groups. The number average molecular weight of the first urethane prepolymer is preferably from 1000 to 100,000. This number average molecular weight is more preferably from 1200 to 50000.

The first polycarbonate polyol is a polycarbonate polyol having at least two hydroxyl groups, and having the structure represented by the formula (1); and is preferably a polycarbonate diol having the structure represented by the formula (1). Examples of the first polycarbonate polyol include reaction products of a polyhydric alcohol with phosgene, and ring-opened polymers of cyclic carbonates (such as alkylene carbonates).

Examples of polyhydric alcohols as used herein include propylene glycol, dipropylene glycol, trimethylene glycol, 1,4-tetramethylene diol, 1,3-tetramethylene diol, 2-methyl-1,3-trimethylene diol, 1,5-pentamethylene diol, neopentyl glycol, 1,6-hexamethylene diol, 3-methyl-1,5-pentamethylene diol, 2,4-diethyl-1,5-pentamethylene diol, glycerin, trimethylol propane, trimethylolethane, cyclohexanediols (such as 1,4-cyclohexanediol), and sugar alcohols (such as xylitol and sorbitol).

Examples of alkylene carbonates as used herein include trimethylene carbonate, tetramethylene carbonate, and hexamethylene carbonate.

The number average molecular weight of the first polycarbonate polyol is preferably from 500 to 10000, and more preferably from 700 to 8000. When this number average molecular weight is 500 or more, low miscibility with the polyurethane segments having the polyether structures represented by the formula (2) is ensured, and the phase separation of the matrix from the domains can be more clarified. When this number average molecular weight is 10000 or less, increase in viscosity of the polycarbonate polyol as the raw material prevents handling from being difficult, which is preferable.

The number average molecular weight of the first polycarbonate polyol can be calculated using hydroxyl values (mgKOH/g) and valences in the same manner as the number average molecular weight of the polyether polyol.

As the polyisocyanate 56 having at least two isocyanate groups which are used in the step (iii), the same one as any of the polyisocyanates exemplified above as the raw material for the first urethane prepolymer can be used. One of these polyisocyanates may be used alone, or two or more of them may be used in combination.

As the polyisocyanates used in the step (iii), a polyisocyanate having at least three isocyanate groups, such as trimer compounds (isocyanurates) or multimer compounds of polyisocyanates, allophanate-type polyisocyanates, and biuret-type polyisocyanates among the above-exemplified polyisocyanates, is preferably contained in the viewpoint of improving the elastic modulus of the matrix.

More preferably, at least one selected from the group consisting of a trimer compound of pentamethylene diisocyanate (isocyanurate), a trimer compound of hexamethylene diisocyanate (isocyanurate), a multimer compound of diphenylmethane diisocyanate, and polymeric MDI can be used. Curing catalysts for urethane elastomers are roughly classified into a urethanization catalyst (reaction-promoting catalyst) for promoting rubberization (resinification) and foaming, and an isocyanuratization catalyst (isocyanate trimerization catalyst). In the present disclosure, one of them may be used alone, or they may be mixed to be used.

Among the foregoing, polymeric MDI is preferable. Here, polymeric MDI is a mixture of a monomeric MDI and a high molecular weight polyisocyanate, and is represented by the following formula (A). In the formula (A), n is preferably from 0 to 4.

Commercially available polymeric MDI may be used, and examples thereof include Millionate MR series (manufactured by Tosoh Corporation) including Millionate MR200 (trade name).

[C4]

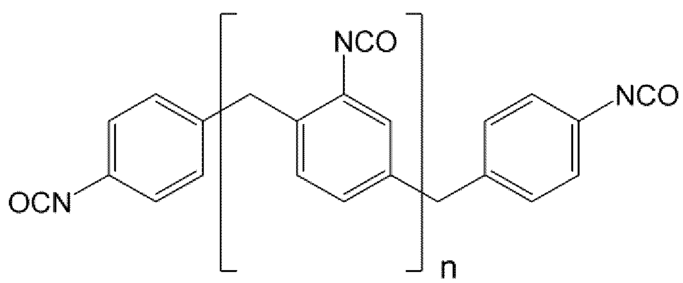

(A)

As the polyisocyanate 56 having at least two isocyanate groups, a polyisocyanate having at least three isocyanate groups, such as polymeric **MDI,** and a bifunctional isocyanate having two isocyanate groups are preferably used in combination. The foregoing use in combination allows the crosslink density to be controlled, and thus, is preferable from the viewpoint on achievement in both low hardness and low compression set.

The amounts of the polyisocyanate having at least three isocyanate groups, and the bifunctional isocyanate having two isocyanate groups are not particularly limited. As the amounts in mixing in the dispersion in the step (iii), the bifunctional isocyanate:the polyisocyanate having at least three isocyanate groups is preferably 3:1 to 1:10, and more preferably 1:1 to 1:6. The amount of the polyisocyanate to 100 parts by mass of the dispersion in the step (iii) is also not particularly limited, and examples of thereof include 1 to 10 parts by mass, and 3 to 8 parts by mass.

Examples of a urethanization catalyst as used herein include: tin-based urethanization catalysts such as dibutyltin dilaurate, and stannous octoate; and amine-based urethanization catalysts such as triethylenediamine, tetramethylguanidine, pentamethyldiethylenetriamine, diethylimidazole, tetramethylpropanediamine, N,N,N'-trimethylaminoethylethanolamine, and 1,4-diazabicyclo[2.2.2]octane-2-methanol. One of them may be used alone, and they may be mixed to be used. Among these urethanization catalysts, triethylenediamine, and 1,4-diazabicyclo[2.2.2]octane-2-methanol are preferable in view of particularly promoting the urethane reaction.

Examples of isocyanuratization catalysts as used herein include: metal oxides such as $Li_2O$, and $(Bu_3Sn)_2O$; hydride compounds such as $NaBH_4$; alkoxide compounds such as $NaOCH_3$, KO-(t-Bu), and borates; amine compounds such as $N(C_2H_5)_3$, $N(CH_3)_2CH_2C_2H_5$, and 1,4-ethylene piperazine (DABCO); alkaline carboxylate salt compounds such as HCOONa, $Na_2CO_3$, PhCOONa/DMF, $CH_3COOK$, $(CH_3COO)_2Ca$, alkaline soaps, and naphthenates; alkaline formate

compounds; and quaternary ammonium salt compounds such as $((R)_3$-NR'OH)-OCOR".

Examples of combination catalysts (cocatalysts) that can be used as the isocyanuratization catalyst include amine/epoxide, amine/carboxylic acid, and amine/alkyleneimide. One of these isocyanuratization catalysts and combination catalysts may be used alone, or they may be mixed to be used.

As a catalyst for urethane synthesis, N,N,N'-trimethylaminoethylethanolamine (hereinafter referred to as ETA), which operates alone as a urethanization catalyst, and also operates as an isocyanuratization catalyst may be used.

In the method of producing the polyurethane elastomer, a chain extender (polyfunctional low-molecular weight polyol) may be used if necessary. Examples of the chain extender include glycols having number average molecular weights of 1000 or less.

Examples of a glycol as used herein include ethylene glycol (EG), diethylene glycol (DEG), propylene glycol (PG), dipropylene glycol (DPG), 1,4-butanediol (1,4-BD), 1,6-hexanediol (1,6-HD), 1,4-cyclohexanediol, 1,4-cyclohexanedimethanol, xylylene glycol (terephthalyl alcohol), and triethylene glycol.

Examples of a chain extender other than glycols as used herein include polyhydric alcohols with trivalent or higher. Examples of a polyhydric alcohol with trivalent or higher as used herein include trimethylolpropane, glycerin, pentaerythritol, and sorbitol. One of them may be used alone, or they may be mixed to be used.

If necessary, additives such as a conducting agent, a pigment, a plasticizer, a waterproofing agent, an antioxidant, an ultraviolet light absorbing agent, and a light stabilizer may also be used in combination.

The molded product can be used as a component for electrophotography, such as a developing roller. The molded product can be also used for pressure-sensitive conductive elastomers.

Examples

Examples according to the present invention will be described below, but the present invention is not limited to these examples.

<Materials for Use>

The materials used in the examples and the comparative examples are hereinafter listed.

[Polyol]

·A-1: polyether diol (polypropylene glycol) [product name: PREMINOL S4013F, carbon number of $R^2$=3 (branched), Mn=12000, hydroxyl value: 9.4 mgKOH/g, manufactured by AGC Inc.]
·A-2: polyether diol (polypropylene glycol) [product name: UNIOL D-4000, carbon number of $R^2$=3 (branched), Mn=4200, hydroxyl value: 40.4 mgKOH/g, manufactured by NOF CORPORATION]
·A-3: polyether diol (copolymer of tetrahydrofuran and 3-methyltetrahydrofuran) [product name: PTG-L3000, carbon number of $R^2$=5 (branched)+4 (linear chain), Mn=2900, hydroxyl value: 38.6 mgKOH/g, manufactured by Hodogaya Chemical Co., Ltd.]
·A-4: polyether diol (polytetramethylene glycol) [product name: PTMG 4000, carbon number of $R^2$=4 (linear chain), Mn=3900, hydroxyl value: 29.1 mgKOH/g, manufactured by Mitsubishi Chemical Corporation]
Regarding the carbon numbers of the polyether diols, for example, the expression of 5 (branched)+4 (linear chain) shows that $R^2$ had a C5 branched structure, and a C4 linear chain structure.
·A-5: polycarbonate diol [product name: Kuraray Polyol C-2090, carbon number of $R^1$=6 (linear chain)+6 (branched), Mn= 2000, manufactured by KURARAY CO., LTD.]
·A-6: polycarbonate diol [product name: Kuraray Polyol C-2065N, carbon number of $R^1$=9 (linear chain)+9 (branched), Mn=2000, hydroxyl value: 56.4 mgKOH/g, manufactured by KURARAY CO., LTD.]
·A-7: polycarbonate diol [product name: DURANOL T6002, carbon number of $R^1$=6 (linear chain), Mn=1900, hydroxyl value: 57.6 mgKOH/g, manufactured by Asahi Kasei Chemicals Corp.]
·A-8: polycarbonate diol [product name: DURANOL G3452, carbon number of $R^1$=3+4, Mn=$2.1\times10^3$, hydroxyl value: 53.6 mgKOH/g, manufactured by Asahi Kasei Chemicals Corp.]
·A-9: polyester diol [product name: Kuraray Polyol P-2050, Mn=1900, hydroxyl value: 58.1 mgKOH/g, manufactured by KURARAY CO., LTD.]

Regarding the carbon numbers of the polycarbonate diols, for example, the expression of 6 (linear chain)+6 (branched) shows that $R^1$ had a C6 linear chain structure, and a C6 branched structure.

[Polyisocyanate]

- ·B-1: xylylene diisocyanate [manufactured by Tokyo Chemical Industry Co., Ltd.]
- ·B-2: polymeric MDI [product name: Millionate MR-200, manufactured by Tosoh Corporation]
- ·B-3: hexamethylene diisocyanate-based polyisocyanate [product name: DURANOL TSE-100, manufactured by Asahi Kasei Corporation]

[Curing Catalyst]

- ·C-1: 1,4-diazabicyclo[2.2.2]octane-2-methanol (product name; RZETA) [manufactured by Tosoh Corporation]

[Conductive Filler]

- ·E-1: carbon black [product name: DENKA BLACK Granule Product (manufactured by Denka Company Limited), average particle diameter: 35 nm, specific surface area: 69 $m^2/g$]
- ·E-2: carbon black [product name: Ketjenblack EC300J (manufactured by Lion Specialty Chemicals Co., Ltd.), average particle diameter: 39.5 nm, specific surface area: 800 $m^2/g$]
- ·E-3: carbon black [product name: Ketjenblack EC600JD (manufactured by Lion Specialty Chemicals Co., Ltd.), average particle diameter: 34.0 nm, specific surface area: 1270 $m^2/g$]
- ·E-4: single wall carbon nanotube [product name: TUBALL (registered trademark) (manufactured by OCSiAl)]

<Evaluations>

The evaluation methods in the examples and the comparative examples were as follows.

[Evaluation 1: Confirmation and Analysis of Matrix and Domains]

Ultrathin slices (500 $\mu m \times 500 \mu m \times 5 \mu m$) were made from a molded product by the use of a freeze fracturing system (trade name: EM FC6, manufactured by Leica Microsystems), and an ultramicrotome (trade name: EM UC6, manufactured by Leica Microsystems). The slices were made at three locations in total: the center; and two locations sufficiently distant from the center at the molded product.

Mapping measurement was conducted on the made slices by the use of an infrared microscope/imaging system (trade names: Spectrum 400 (analyzer), and Spotlight 400 (scanning device), manufactured by PerkinElmer, Inc.) to create mapping images. Concerning the measurement, the mapping measurement was conducted using an ATR imaging accessory under the following conditions: pixel size: 1.56 $\mu m$; resolution: 16 $cm^{-1}$; field of view: 300 $\mu m \times 300 \mu m$; and scan speed: 1.0 cm/s. On the mapping images, the magnitude of the integrated values of the infrared absorption spectra for respective pixels was imaged.

From each of the resulting mapping images, the presence of a matrix mapped as a continuous phase, and the presence of domains mapped as discontinuous phases were confirmed. Furthermore, from the infrared absorption spectrum of the matrix of each of the mapping images, it was confirmed that the matrix had a structure corresponding to the polycarbonate diol that was the first structure. From the infrared absorption spectra of the domains of the mapping images, it was confirmed that the domains had the second structure (e.g., a structure corresponding to the polypropylene glycol). That is, it was confirmed that the matrix had the carbonate structure represented by the formula (1), and the domains had the ether structure represented by the formula (2).

[Evaluation 2: Evaluation of Parameters Indicating Visco-elastic Terms]

Ultrathin slices were made in the same manner as in evaluation 1.

The number of the made slices was three in total. Arbitrarily, 50 $\mu m$ square viewing regions were selected, and viscoelasticity images were observed in the three viewing regions in total. In the three viewing regions in total, the viscoelasticity images were measured using a scanning probe microscope (trade name: S-Image, manufactured by SII NanoTechnology Inc.). The measurement mode for the viscoelasticity images was set in the VE-DFM. For a cantilever, "SI-DF3" (trade name, manufactured by Hitachi High-Tech Corporation, spring constant=1.9 N/m) was used. Furthermore, the scanning frequency was set to 0.5 Hz.

From the obtained viscoelasticity images, ten parameters indicating the visco-elastic terms of the matrix, and ten parameters indicating those of the domains were obtained from each of the viewing regions, and from the arithmetic mean values of these parameters, the parameter A (mV) indicating the visco-elastic term of the domains, and the parameter B (mV) indicating the visco-elastic term of the matrix were obtained.

It is noted that it was confirmed in the viscoelasticity images of the SPM that the domains and the matrixes were exposed in the cross sections.

[Evaluation 3: Evaluation of Location and Ratio (D/C) of Conductive Filler]

(Evaluation with 3D Laser Raman Microspectroscopy System)

Slices (500 μm×500 μm×5 μm) were made from a molded product by the use of a freeze fracturing system (trade name: EM FC6, manufactured by Leica Microsystems), and an ultramicrotome (trade name: EM UC6, manufactured by Leica Microsystems).

On an arbitrary location on each of the slices, a mapping image based on the integrated intensity of the Raman peaks in a 30 μm×30 μm square viewing region (hereinafter simply referred to as the "mapping image") was obtained using a 3D laser Raman microspectroscopy system (trade name: Nanofinder 30, manufactured by Tokyo Instruments, Inc.) under the following conditions: excitation wavelength: 532 nm (Nd: $YVO_4$ laser light source); intensity: 300 μW; 100-power objective lens; pin hole diameter: 100 μm; and diffraction grating: 300 gr/mm.

The mapping images obtained here were:

a mapping image based on the integrated intensity of the peaks that appeared in the range of 0 to 400 $cm^{-1}$ where the peaks assigned to polycarbonate and polyether appear (first mapping image);
a mapping image based on the integrated intensity of the peaks that appeared in the range of 1400 to 1800 $cm^{-1}$ where the peak assigned to the G band of carbon nanotubes appear (second mapping image);
and a mapping image based on the integrated intensity of the peaks that appeared in the range of 1000 to 1800 $cm^{-1}$ where the peaks assigned to the G band and the D band of carbon black appear (third mapping image).

**In** the first mapping image, the integrated intensity of the peak assigned to polycarbonate was more than the integrated intensity of the peak assigned to polyether whereby the presence of the matrix containing a polycarbonate urethane, and the presence of the domains containing a polyether in the viewing region were visualized.

From the second mapping image, the portion of the carbon nanotube could be distinguished from the region of a urethane elastomer. Furthermore, by comparing the first mapping image and the second mapping image, part of the carbon nanotube present in the matrix, and part of the carbon nanotube present in the domains could be identified.

Furthermore, from the third mapping image, the portion of the carbon black could be distinguished from the region of the urethane elastomer. Furthermore, by comparing the first mapping image and the third mapping image, part of the carbon black present in the matrix, and part of the carbon black present in the domains could be identified.

Then, image processing software (trade name: ImageProPlus, manufactured by Media Cybernetics, Inc.) was used for the first mapping image to obtain a binarized image for analysis where the portion of the matrix containing a polycarbonate urethane, and the portions of the domains containing a polyether were binarized. Furthermore, for the second mapping image and the third mapping image, in the same manner for the first mapping image, binarized images for analysis where the portion of the carbon black or the carbon nanotube, and the portion of the urethane elastomer were binarized were obtained. The thresholds for the binarization were determined from the brightness distributions of the mapping images based on the algorithm of Otsu, which is described in NPL 1.

Next, from the obtained binarized images, the total area of the carbon black or the carbon nanotube (conductive filler) present in the viewing regions were obtained using the count function of the image processing software, and was defined as a content C. Further, the total area of the carbon black or the carbon nanotube (conductive filler) present in the matrix was obtained and defined as a content D. The value of the ratio D/C of the content D to the content C was calculated.

[Evaluation 4: Evaluation of Volume Resistivity]

A molded product having a thickness of 2 mm was cut into 30 mm×30 mm test pieces to measure the volume resistivity at 23°C. Specifically, the measurement was performed using a digital ultra-high resistance/micro current meter R8340A (manufactured by ADVANTEST CORPORATION) by placing the molded product on a sample holder SH2-Z (manufactured by TOYO Corporation), and applying an appropriate voltage within the range of a direct current of 2 to 50 V. The arithmetic mean value of the three samples was used. An appropriate voltage here means the value of the voltage that

allows the current value to be measured using the aforementioned apparatus.

[Evaluation 5: Evaluation of Young's Modulus]

The molded product having a thickness of 2 mm was cut into 5 mm×30 mm test pieces to measure the Young's modulus at 23°C. Specifically, a tensile test was performed on the test pieces at the rate of 5 mm/min by the use of a universal tensile testing machine (manufactured by Orientec Corporation, product name: TENSILON RTF-1250) after the distance between chucks were set to 10 mm to measure the Young's modulus (unit: MPa). The arithmetic mean value of the three samples was used.

[Evaluation 6: Evaluation of Elastic Deformation Work Rate (ηiT)]

As a performance index for compression set, an elastic deformation work rate (ηiT) at the temperature of 23°C was used. The ηiT was measured under the following measurement conditions by the use of a nanoindenter (FISCHERSCOPE HM2000 manufactured by FISCHER INSTRUMENTS K.K.) by using a Vickers indenter having the shape of a quadrangular pyramid with the opposite faces intersecting at 136° as an indenter.

·Maximum indentation load: 10 mN
·Load rate: 10 mN/30 sec
·Maximum load hold time: 60 seconds
·Unloading time: 5 seconds

The ηiT was calculated from the resulting "load-displacement curve" by using the following equation:

$$\eta iT\ (\%) = (\text{elastic deformation work} / \text{total deformation work}) \times 100$$

Compression set was evaluated on the basis of the obtained ηiT and the following criteria:
Evaluation criteria

Evaluation A: the ηiT was 80% or more
Evaluation B: the ηiT was 60% or more and less than 80%
Evaluation C: the ηiT was less than 60%

[Evaluations 7 and 8: Evaluations of Arithmetic Mean Value (Mean Diameter) of Circle-Equivalent Diameters of Domains, and Ratio of Areas]

Using image processing software (trade name: ImageProPlus, manufactured by Media Cybernetics, Inc.), each of the three viscoelasticity images obtained in evaluation 2 was converted to a monochromatic image with 256 gradations, and next, was binarized to obtain a binarized image for analysis. The thresholds for the binarization were determined from the brightness distributions of the monochromatic images based on the algorithm of Otsu, which is described in NPL 1.

From each of the obtained binarized images, the cross-sectional area and the numbers of the domains, and the average cross-sectional area of the domains were obtained using the count function of the image processing software. It is noted that out of the domains, which were determined as domains by the count function, domains each having a cross-sectional area less than 0.05% of any of the 50 μm square viewing regions were regarded as domains due to noise, and deleted from the data. The obtained cross-sectional area of the domains was subtracted from the entire area of the viewing region whereby the area corresponding to the matrix was calculated. From these areas, the ratio of the areas (the matrix/the domains) was calculated.

The arithmetic mean value (mean diameter) of the circle-equivalent diameters of the domains was calculated by the following equation:

the circle-equivalent diameter of the domains = $\{(\text{cross-sectional area of the domains})/(\text{the number})/(\pi)\}^{0.5}$

[Evaluation 9: tanδ Peak Temperature Derived from Glass Transition]

Measurement was performed as follows using a viscoelasticity measuring device (trade name: Physica MCR302, manufactured by Anton Paar GmbH): a test piece having a thickness of 2 mm and a width of 5 mm that was formed with a die cutter was set, and the viscoelasticity thereof was measured in a torsion mode (twisting) in the length

of 20 mm from -85°C to 20°C at the temperature rising rate of 2°C/min at the frequency of 1 Hz to obtain the temperature-tanδ curve.

(Evaluation 10: Measurement of Circularity and Number of Domains)

From the binarized images obtained in evaluations 7 and 8, the circularity of the domains was calculated using the count function of the aforementioned image processing software. In the same manner as in evaluations 7 and 8, the domains due to noise were deleted from the data. Among the domains in each of the viewing regions, the number of the domains having a circularity of 0.60 to 0.95 was counted to calculate the proportion (%) to the total number of the domains in each of the viewing regions.

[Example 1]

<Preparation of Urethane Prepolymer UP1-1>

A polyol having isocyanate groups at the ends thereof (first urethane prepolymer) was synthesized by uniformly mixing, and heating, at the temperature of 100°C for 24 hours, 41.4 parts by mass of the polyol A-1, 0.7 part by mass of the polyisocyanate B-1, and 500 ppm of the curing catalyst C-1. In this mixture, 50.6 parts by mass of the polyol A-5 was mixed, and heated at the temperature of 100°C for 4 hours whereby a urethane prepolymer UP1-1 (second urethane prepolymer) was produced (step (i)).

In the following examples and comparative examples, the amount of the curing catalyst C-1 was in terms of mass ppm based on the mass of the total material used for the molded product.

<Synthesis of Molded Product No. 1>

A urethane prepolymer UP1-2 containing a conductive filler was obtained by mixing 92.8 parts by mass of the urethane prepolymer UP1-1, and 2.0 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm (step (ii)).

A mixture for forming a molded product was obtained by mixing 94.8 parts by mass of the UP1-2, 1.2 parts by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, the mixture for forming a polyurethane elastomer was pre-heated to the temperature of 130°C, poured into a mold onto which a release agent was thinly applied and which was for making a sheet having a thickness of 2 mm, heated at a temperature of 130°C for 2 hours, and cured (step (iii)). Next, the cured material was released from the mold, and subjected to post-cure at the temperature of 80°C for 3 days to obtain a sheet-shaped molded product No. 1 having a thickness of 2 mm.

[Example 2]

<Preparation of Urethane Prepolymer UP2-1>

A polyol having isocyanate groups at the ends thereof was synthesized by uniformly mixing, and heating, at the temperature of 100°C for 24 hours, 32.0 parts by mass of the polyol A-1, 0.5 part by mass of the polyisocyanate B-1, and 500 ppm of the curing catalyst C-1. In this mixture, 59.4 parts by mass of the polyol A-5 was mixed, and heated at the temperature of 100°C for 4 hours whereby a urethane prepolymer UP2-1 was produced.

<Synthesis of Molded Product No. 2>

A urethane prepolymer UP2-2 containing a conductive filler was obtained by mixing 91.9 parts by mass of the urethane prepolymer UP2-1, and 3.1 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm. A mixture for forming a molded product was obtained by mixing 95.0 parts by mass of the UP2-2, 2.1 parts by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, a molded product No. 2 was obtained in the same manner as in example 1 except that this mixture for forming a molded product was used.

[Example 3]

<Preparation of Urethane Prepolymer UP3-1>

A polyol having isocyanate groups at the ends thereof was synthesized by uniformly mixing, and heating, at the temperature of 100°C for 24 hours, 22.6 parts by mass of the polyol A-1, 0.4 part by mass of the polyisocyanate B-1, and 500 ppm of the curing catalyst C-1. In this mixture, 68.0 parts by mass of the polyol A-5 was mixed, and heated at the temperature of 100°C for 4 hours whereby a urethane prepolymer UP3-1 was produced.

<Synthesis of Molded Product No. 3>

A urethane prepolymer UP3-2 containing a conductive filler was obtained by mixing 91.0 parts by mass of the urethane prepolymer UP3-1, and 3.6 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm. A mixture for forming a molded product was obtained by mixing 94.6 parts by mass of the UP3-2, 3.0 parts by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, a molded product No. 3 was obtained in the same manner as in example 1 except that this mixture for forming a molded product was used.

[Example 4]

A molded product No. 4 was obtained in the same manner as in example 2 except that the adding amount of the conductive filler E-1 was set to 4.7 parts by mass.

[Example 5]

A molded product No. 5 was obtained in the same manner as in example 2 except that 1.0 part by mass of the conductive filler E-2 was used instead of the conductive filler E-1.

[Example 6]

A urethane prepolymer UP6-1 was prepared in the same manner as in example 2 except that the polyol A-6 was used instead of the polyol A-5. Further, a urethane prepolymer UP6-2 and a molded product No. 6 were obtained in the same manner as in example 2 except that the urethane prepolymer UP6-1 was used.

[Example 7]

A urethane prepolymer UP7-1 was prepared in the same manner as in example 2 except that the polyol A-7 was used instead of the polyol A-5. Further, a urethane prepolymer UP7-2 and a molded product No. 7 were obtained in the same manner as in example 2 except that the urethane prepolymer UP7-1 was used.

[Example 8]

A urethane prepolymer UP8-1 was prepared in the same manner as in example 2 except that the polyol A-8 was used instead of the polyol A-5. Further, a urethane prepolymer UP8-2 and a molded product No. 8 were obtained in the same manner as in example 2 except that the urethane prepolymer UP8-1 was used.

[Example 9]

A urethane prepolymer UP9-1 was prepared in the same manner as in example 2 except that 41.5 parts by mass of the polyol A-5 and 17.8 parts by mass of the polyol A-9 were used instead of 59.4 parts by mass of the polyol A-5. Further, a urethane prepolymer UP9-2 and a molded product No. 9 were obtained in the same manner as in example 2 except that

the urethane prepolymer UP9-1 was used.

[Example 10]

<Preparation of Urethane Prepolymer UP10-1>

A polyol having isocyanate groups at the ends thereof was synthesized by uniformly mixing, and heating, at the temperature of 100°C for 24 hours, 31.6 parts by mass of the polyol A-2, 2.8 parts by mass of the polyisocyanate B-1, and 500 ppm of the curing catalyst C-1. In this mixture, 58.8 parts by mass of the polyol A-5 was mixed, and heated at the temperature of 100°C for 4 hours whereby a urethane prepolymer UP10-1 was produced.

<Synthesis of Molded Product No. 10>

A urethane prepolymer UP10-2 containing a conductive filler was obtained by mixing 93.2 parts by mass of the urethane prepolymer UP10-1, and 3.1 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm.
A mixture for forming a molded product was obtained by mixing 96.3 parts by mass of the UP10-2, 0.8 part by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.
Next, a molded product No. 10 was obtained in the same manner as in example 1 except that this mixture for forming a molded product was used.

[Example 11]

<Preparation of Urethane Prepolymer UP11-1>

A polyol having isocyanate groups at the ends thereof was synthesized by uniformly mixing, and heating, at the temperature of 100°C for 4 hours, 31.4 parts by mass of the polyol A-3, 4.1 parts by mass of the polyisocyanate B-1, and 500 ppm of the curing catalyst C-1. In this mixture, 58.3 parts by mass of the polyol A-5 was mixed, and heated at the temperature of 100°C for 4 hours whereby a urethane prepolymer UP11-1 was produced.

<Synthesis of Molded Product No. 11>

A urethane prepolymer UP11-2 containing a conductive filler was obtained by mixing 93.8 parts by mass of the urethane prepolymer UP11-1, and 3.1 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm.
A mixture for forming a molded product was obtained by mixing 96.9 parts by mass of the UP11-2, 0.2 part by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.
Next, a molded product No. 11 was obtained in the same manner as in example 1 except that this mixture for forming a molded product was used.

[Example 12]

<Preparation of Urethane Prepolymer UP12-1>

A polyol having isocyanate groups at the ends thereof was synthesized by uniformly mixing, and heating, at the temperature of 100°C for 24 hours, 31.6 parts by mass of the polyol A-4, 3.1 parts by mass of the polyisocyanate B-1, and 500 ppm of the curing catalyst C-1. In this mixture, 58.7 parts by mass of the polyol A-5 was mixed, and heated at the temperature of 100°C for 4 hours whereby a urethane prepolymer UP12-1 was produced.

<Synthesis of Molded Product No. 12>

A urethane prepolymer UP12-2 containing a conductive filler was obtained by mixing 93.4 parts by mass of the

urethane prepolymer UP12-1, and 3.1 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm.

A mixture for forming a molded product was obtained by mixing 96.5 parts by mass of the UP12-2, 0.6 part by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, a molded product No. 12 was obtained in the same manner as in example 1 except that this mixture for forming a molded product was used.

[Example 13]

<Preparation of Urethane Prepolymer UP13-1>

A polyol having isocyanate groups at the ends thereof was synthesized by uniformly mixing, and heating, at the temperature of 100°C for 24 hours, 35.7 parts by mass of the polyol A-1, 0.6 part by mass of the polyisocyanate B-1, and 500 ppm of the curing catalyst C-1. In this mixture, 53.6 parts by mass of the polyol A-5 was mixed, and heated at the temperature of 100°C for 4 hours whereby a urethane prepolymer UP13-1 was produced.

<Synthesis of Molded Product No. 13>

A urethane prepolymer UP13-2 containing a conductive filler was obtained by mixing 89.9 parts by mass of the urethane prepolymer UP13-1, and 2.6 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm.

A mixture for forming a molded product was obtained by mixing 92.5 parts by mass of the UP13-2, 4.1 parts by mass of the polyisocyanate B-1, and 6.0 parts by mass of the polyisocyanate B-3, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, a molded product No. 13 was obtained in the same manner as in example 1 except that this mixture for forming a molded product was used.

[Example 14]

A molded product No. 14 was obtained in the same manner as in example 13 except that 1.0 part by mass of the conductive filler E-2 was used instead of the conductive filler E-1.

[Example 15]

A molded product No. 15 was obtained in the same manner as in example 13 except that 1.0 part by mass of the conductive filler E-3 was used instead of the conductive filler E-1.

[Example 16]

A molded product No. 16 was obtained in the same manner as in example 13 except that 0.1 part by mass of the conductive filler E-4 was used instead of the conductive filler E-1.

[Example 17]

<Preparation of Urethane Prepolymer UP17-1>

A polyol having isocyanate groups at the ends thereof was synthesized by uniformly mixing, and heating, at the temperature of 100°C for 24 hours, 8.7 parts by mass of the polyol A-1, 0.3 part by mass of the polyisocyanate B-1, and 500 ppm of the curing catalyst C-1. In this mixture, 78.1 parts by mass of the polyol A-5 was mixed, and heated at the temperature of 100°C for 4 hours whereby a urethane prepolymer UP17-1 was produced.

<Synthesis of Molded Product No. 17>

A urethane prepolymer UP17-2 containing a conductive filler was obtained by mixing 87.1 parts by mass of the urethane prepolymer UP17-1, and 4.7 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm.

A mixture for forming a molded product was obtained by mixing 91.8 parts by mass of the UP17-2, 6.9 parts by mass of the polyisocyanate B-1, and 6.0 parts by mass of the polyisocyanate B-3, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, a molded product No. 17 was obtained in the same manner as in example 1 except that this mixture for forming a molded product was used.

[Comparative Example 1]

<Preparation of Urethane Prepolymer UPC1-1>

A polyol having isocyanate groups at the ends thereof was synthesized by uniformly mixing, and heating, at the temperature of 100°C for 24 hours, 51.1 parts by mass of the polyol A-1, 0.8 part by mass of the polyisocyanate B-1, and 500 ppm of the curing catalyst C-1. In this mixture, 41.8 parts by mass of the polyol A-5 was mixed, and heated at the temperature of 100°C for 4 hours whereby a urethane prepolymer UPC1-1 was produced.

<Synthesis of Molded Product No. C1>

A urethane prepolymer UPC1-2 containing a conductive filler was obtained by mixing 93.7 parts by mass of the urethane prepolymer UPC1-1, and 2.0 parts by mass of the conductive filler E-1, and stirring the mixture until the mixture was heterogeneous using a rotation-revolution type vacuum stirring and defoaming mixer (product name: V-mini300, manufactured by EME, Inc.) at the revolution speed of 1600 rpm.

A mixture for forming a molded product was obtained by mixing 95.7 parts by mass of the UPC1-2, 0.3 part by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at the revolution speed of 1600 rpm.

Next, a molded product No. C1 was obtained in the same manner as in example 1 except that this mixture for forming the molded product was used.

[Comparative Example 2]

A molded product No. C2 was obtained in the same manner as in example 2 except that the adding amount of the conductive filler E-1 was set to 6.4 parts by mass.

[Comparative Example 3]

<Preparation of Urethane Prepolymer UPC3>

A polyol having isocyanate groups at the ends thereof was synthesized by uniformly mixing, and heating, at the temperature of 100°C for 24 hours, 32.0 parts by mass of the polyol A-1, 3.1 parts by mass of the conductive filler E-1, 0.5 part by mass of the polyisocyanate B-1, and 500 ppm of the curing catalyst C-1. In this mixture, 59.4 parts by mass of the polyol A-5 was mixed, and heated at the temperature of 100°C for 4 hours whereby a urethane prepolymer UPC3-1 containing a conductive filler was produced.

<Synthesis of Molded Product No. C3>

A mixture for forming a molded product was obtained by mixing 95.0 parts by mass of the urethane prepolymer UPC3, 2.1 parts by mass of the polyisocyanate B-1, and 6.0 parts by mass of the polyisocyanate B-2, and stirring the mixture for approximately 1 to 2 minute(s) until the mixture was heterogeneous using a rotation-revolution type vacuum stirring and defoaming mixer (product name: V-mini300, manufactured by EME, Inc.) at a revolution speed of 1600 rpm.

Next, a molded product No. C3 was obtained in the same manner as in example 1 except that this mixture for forming a molded product was used.

[Comparative Example 4]

The following were uniformly mixed: 18.2 parts by mass of the polyol A-2; 72.6 parts by mass of the polyol A-4; 3.1 parts by mass of the conductive filler E-1; and 500 ppm of the curing catalyst C-1. A mixture for forming the molded product was obtained by mixing, in this mixture, 3.2 parts by mass of the polyisocyanate B-1, and 6.0 parts by mass of the polyisocyanate B-3, and stirring the mixture for approximately 1 to 2 minute(s) until the mixture was heterogeneous using a rotation-revolution type vacuum stirring and defoaming mixer (product name: V-mini300, manufactured by EME, Inc.) at a revolution speed of 1600 rpm. Next, a molded product No. C4 was obtained in the same manner as in example 1 except that this mixture for forming a molded product was used.

Tables 1-1 to 1-3 show the results of the evaluations of the molded products according to examples 1 to 17 and comparative examples 1 to 4.

[Table 1-1]

Table 1-1

| | | Example | | | | | | | |
|---|---|---|---|---|---|---|---|---|---|
| | | 1 | 2 | 3 | 4 | 5 | 6 | 7 | 8 |
| Content of conductive filler (mass%) | | 2.0 | 3.0 | 3.5 | 4.5 | 1.0 | 3.0 | 3.0 | 3.0 |
| Evaluation 1 | Confirmation and analysis of matrix phase (M) and domain phase (D) | ·Clear phase separation of M from D<br>·M: structure derived from polycarbonate<br>·D: structure derived from polyether | Same as left | Same as left | Same as left | Same as left | Same as left | Same as left | Same as left |
| Evaluation 2 | Parameter A | 40 | 40 | 40 | 40 | 40 | 40 | 40 | 40 |
| | Parameter B | 210 | 240 | 280 | 310 | 260 | 240 | 270 | 280 |
| Evaluation 3 | DIC | 0.93 | 1.00 | 0.98 | 0.96 | 0.95 | 0.95 | 0.96 | 0.95 |
| Evaluation 4 | Volume resistivity (Ocm) | $5.0x10^5$ | $2.4x10^5$ | $2.8x10^4$ | $5.2x10^3$ | $4.5x10^4$ | $3.5x10^5$ | $3.2x10^5$ | $4.8x10^5$ |
| Evaluation 5 | Young's modulus (Mpa) | 1.4 | 1.8 | 2.4 | 3.5 | 2.0 | 1.7 | 2.1 | 2.3 |
| Evaluation 6 | elastic deform ation work rate (%) | 90 | 86 | 80 | 72 | 88 | 90 | 91 | 83 |
| | Rank of evaluation | A | A | A | B | A | A | A | A |
| Evaluation 7 | Domain average particle diameter (μm) | 4.2 | 3.1 | 2.6 | 4.2 | 2.5 | 2.8 | 2.4 | 2.7 |
| Evaluation 8 | Ratio of areas of matrix/dom ains(%) | 56/44 | 65/35 | 73/27 | 64/36 | 65/35 | 63/37 | 64/36 | 65/35 |

(continued)

| | | Example | | | | | | | |
|---|---|---|---|---|---|---|---|---|---|
| | | 1 | 2 | 3 | 4 | 5 | 6 | 7 | 8 |
| Evaluation 9 | tanδ peak temperature (°C) (glass transition tem perature) | -65 / -20 | -65 / -20 | -65 / -19 | -65/-20 | -65/-20 | -61 / -33 | -64 / -30 | -65 / -6 |
| Evaluation 10 | Average cir-cularity of do-mains | 0.95 | 0.95 | 0.94 | 0.92 | 0.95 | 0.95 | 0.95 | 0.95 |
| | Domain number% | 90 | 90 | 90 | 90 | 90 | 90 | 90 | 90 |

In tables 1-1 and 1-2, "Same as left" indicates the phase separation of the matrix from the domains same as example 1 or 9. The domain mean diameter indicates the arithmetic mean value of the circle-equivalent diameters of the domains. "Domain number%" indicates the percentage of the number of domains having a circularity of 0.60 to 0.95 to the total number of the domains present in the viewing region.

[Table 1-2]

Table 1-2

| | | Example | | | | | | | | |
|---|---|---|---|---|---|---|---|---|---|---|
| | | 9 | 10 | 11 | 12 | 13 | 14 | 15 | 16 | 17 |
| Content of conductive filler (mass%) | | 3.0 | 3.0 | 3.0 | 3.0 | 2.5 | 1.0 | 1.0 | 0.1 | 4.5 |
| Evaluation 1 | Confirmation and analysis of matrix phase (M) and domain phase (D) | ·Clear phase separation of M from D<br>·M: structure derived from polycarbonate<br>·D: structure derived from polyether | Same as left | Same as left | Same as left | Same as left | Same as left | Same as left | Same as left | Same as left |
| Evaluation 2 | Parameter A | 60 | 80 | 90 | 80 | 40 | 40 | 40 | 40 | 40 |
| | Parameter B | 250 | 220 | 220 | 210 | 210 | 210 | 200 | 200 | 210 |
| Evaluation 3 | D/C | 0.96 | 0.95 | 0.98 | 0.95 | 0.95 | 0.90 | 0.89 | 0.92 | 0.96 |
| Evaluation 4 | Volume resistivity (Ωcm) | $3.8x10^5$ | $4.2x10^5$ | $2.2x10^6$ | $4.4x10^6$ | $8.6x10^3$ | $4.1x10^3$ | $2.0x10^3$ | $1.8x10^4$ | $2.2x10^6$ |
| Evaluation 5 | Young's modulus (Mpa) | 1.7 | 2.0 | 3.0 | 3.2 | 1.5 | 1.7 | 1.3 | 1.1 | 4.0 |
| Evaluation 6 | elastic deform ation work rate (%)<br>Rank of evaluation | 90<br>A | 80<br>A | 75<br>B | 72<br>B | 70<br>B | 75<br>B | 73<br>B | 75<br>B | 75<br>B |
| Evaluation 7 | Domain average particle diameter (μm) | 2.5 | 2.8 | 2.1 | 2.0 | 2.8 | 3.1 | 2.7 | 2.9 | 2.3 |
| Evaluation 8 | Ratio of areas of matrix/domains(%) | 65/35 | 63/37 | 68/32 | 66/34 | 59/41 | 60/40 | 58/42 | 61/39 | 90/10 |
| Evaluation 9 | tanδ peak temperature (°C) (glass transition tem perature) | -63 / -30 | -60 / -24 | -73 / -25 | -69 / -27 | -65 / -18 | -64 / -18 | -65 / -18 | -65 / -18 | -65/-18 |
| Evaluation 10 | Average circularity of domains | 0.95 | 0.95 | 0.95 | 0.95 | 0.95 | 0.95 | 0.95 | 0.95 | 0.95 |
| | Domain number% | 90 | 90 | 90 | 90 | 90 | 90 | 90 | 90 | 90 |

[Table 1-3]

Table 1-3

| | | Comparative example | | | |
|---|---|---|---|---|---|
| | | 1 | 2 | 3 | 4 |
| Content of conductive filler (mass%) | | 2.0 | 6.0 | 3.0 | 3.0 |
| Evaluation 1 | Confirmation and analysis of matrix phase (M) and domain phase (D) | ·Clear phase separation of M from D<br>·M: structure derived from polyether<br>-D: structure derived from polycarbonate | ·Clear phase separation of M from D<br>·M: structure derived from polycarbonate<br>·D: structure derived from polyether | ·Clear phase separation of M from D<br>·M: structure derived from polycarbonate<br>·D: structure derived from polyether | No phase separation of M from D was confirmed. |
| Evaluation 2 | Param eter A | 220 | 40 | 80 | - |
| | Parameter B | 80 | 250 | 210 | - |
| Evaluation 3 | D/C | 0.10 | 0.92 | 0.55 | - |
| Evaluation 4 | Volume resistivity (Ωcm) | $8.2\times10$ | $1.2\times10^{3}$ | $8.0\times10$ | $2.5\times10^{11}$ |
| Evaluation 5 | Young's modulus (Mpa) | 1.8 | 4.3 | 2.5 | 1.5 |
| Evaluation 6 | elastic deformation work rate (%) | 40 C | 59 C | 80 A | 55 C |
| Evaluation 7 | Domain average particle diameter (μm) | 3.2 | 4.5 | 3.6 | - |
| Evaluation 8 | Ratio of areas of m atrix/dom ains(%) | 57/43 | 65/35 | 65/35 | - |
| Evaluation 9 | tanδ peak temperature (°C) (glass transition tem perature) | -63 / -20 | -65 / -20 | -65/-20 | -67 |
| Evaluation 10 | Average circularity of domains | 0.95 | 0.90 | 0.85 | - |
| | Domain number% | 90 | 90 | 90 | - |

The results shown in tables 1-1 to 1-3 will be described below.

Concerning the results of evaluation 1, clear phase separation of the matrix from domains was observed in the molded products Nos. 1 to 17 according to examples 1 to 17. It was also confirmed that the matrix contained a polyurethane having the first structure (structure derived from polycarbonate), and the domains had the second structure (structure derived from polyether).

Concerning the results of evaluation 2, in each of the molded products Nos. 1 to 17, the relationship between the parameter A indicating the visco-elastic term of the domains, and the parameter B indicating the visco-elastic term of the matrix was $A<B$.

Concerning the results of evaluation 3, in each of the molded products Nos. 1 to 17, it was confirmed that the relationship between the content C of the conductive filler per unit cross-sectional area, and the content D of the conductive filler contained in the matrix per unit cross-sectional area was $D/C \geq 0.70$. That is, it was confirmed that the conductive filler was predominantly distributed in the matrix.

In contrast, in the molded product No. C1 according to comparative example 1, it was confirmed that concerning

the results of evaluation 1, a polyurethane having a structure derived from polyether was contained in the matrix, and a structure derived from polycarbonate was contained in the domains. Further, concerning the results of evaluation 2, it was confirmed that the relationship between the parameters indicating the visco-elastic terms was A>B. As a result of the foregoing, the following tendency was shown: the elastic deformation work rate of the molded product No. C1, where the structure derived from polyether which was inferior in compression set was contained in the matrix, was significantly lower than any of those of the molded products Nos. 1 to 17.

The reason why, comparing the molded product No. C1 and the molded product No. 1, the structures of the matrix and the domains were reversed and the structure of the matrix was derived from polyether is considered to be because the amount of the polycarbonate diol used for making the molded product relatively decreased compared to the amount of the polyether diol, and a phase structure that could stably exist changed.

With respect to the molded product No. C2 according to comparative example 2, the conductive filler was excessive. It is considered that as a result, low hardness and low compression set could not be achieved although the molded product had conductivity.

With respect to the molded product No. C3 according to comparative example 3, it was confirmed that concerning the results of evaluation 3, the relationship between the contents C and D of the conductive filler was D/C<0.70, and the conductive filler was not predominantly distributed in the matrix. Therefore, in the molded product No. C3, formation of conduction paths due to the addition of the conductive filler was difficult. Thus, the molded product did not display conductivity (>$10^{10}$ Ω·cm) even though the adding amount of the conductive filler was approximately the same as any of the molded products Nos. 1 to 17.

Furthermore, with respect to the molded product No. C4 according to comparative example 4, the phase separation of the matrix from the domains was not confirmed concerning the result of evaluation 1. Therefore, in the molded product No. C4, formation of conduction paths by addition of a small amount of the conductive filler which was because of uneven distribution of the conductive filler was difficult. Thus, the molded product did not display conductivity (>$10^{10}$ Ω·cm) even though the adding amount of the conductive filler was approximately the same as any of the molded products Nos. 1 to 17.

Further, in the molded product No. C4, since the contribution of the structure derived from polyether to compression set increased, the following tendency was shown: the elastic deformation work rate significantly lowered compared to those of the molded products Nos. 1 to 17.

From the above results, it has become clear that the molded product according to the present disclosure can achieve low compression set, low hardness, and can have conductivity. These effects are determined to be achievable by unevenly distributing a small amount of a conductive filler throughout a phase-separated structure formed by arranging a polycarbonate polyurethane in a matrix, and a structural unit softer than the polycarbonate polyurethane in domains.

The present disclosure is not limited to the above embodiments, and various changes and modifications can be made therein without departing from the spirit and scope of the present disclosure. Therefore, to set out the scope of the present disclosure, the following claims are hereby appended.

This application claims priority based on Japanese Patent Application No. 2022-170591 filed on October 25, 2022, and Japanese Patent Application No. 2023-175847 filed on October 11, 2023, the entire contents of which are incorporated herein by reference.

## Claims

**1.** A molded product comprising

a polyurethane elastomer, and
a conductive filler comprised in the polyurethane elastomer, wherein
the polyurethane elastomer has a matrix having a first structure represented by the following formula (1), and domains dispersed in the matrix,
the domains have a second structure different from the first structure,
the conductive filler is predominantly distributed in the matrix,
relationship between a parameter A and a parameter B is A<B where the parameter A indicates a visco-elastic term of the domains and the parameter B indicates a visco-elastic term of the matrix, measured in a viscoelasticity image by a scanning probe microscope in a cross section of the molded product exposed with the domains and the matrix,
a content of the conductive filler in the molded product is 0.02 to 5.0 mass%,
a volume resistivity of the molded product is $1.0\times10^9$ Ω·cm or less, and
a Young's modulus of the molded product is 0.5 to 4.0 MPa:

[Chem. 1]

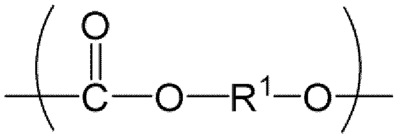

(1)

where, in the formula (1), $R^1$ represents C3-12 alkylene group.

**2.** The molded product according to claim 1, wherein the $R^1$ is C3-9 alkylene group.

**3.** The molded product according to claim 1 or 2, wherein the second structure is represented by the following formula (2):

[Chem.2]

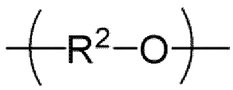

(2)

where, in the formula (2), $R^2$ represents C3-6 alkylene group.

**4.** The molded product according to claim 3, wherein $R^2$ is C3-5 alkylene group having a branched structure.

**5.** The molded product according to any one of claims 1 to 4, wherein a value of a ratio D/C of a content D with respect to a content C is D/C≥0.80 where the content C is a total area of the conductive filler per 30 μm×30 μm viewing region, and the content D is a total area of the conductive filler contained in the matrix in the viewing region, the viewing region being observed in the cross section.

**6.** The molded product according to any one of claims 1 to 5, wherein the conductive filler is carbon black.

**7.** The molded product according to any one of claims 1 to 6, wherein a ratio of areas of the matrix with respect to the domains (the matrix/the domains) observed in a 50 μm×50 μm viewing region on the cross section is 50/50 to 85/15.

**8.** The molded product according to any one of claims 1 to 7, wherein an arithmetic mean value of circle-equivalent diameters of the domains observed in the cross section is 0.2 to 30.0 μm.

**9.** The molded product according to any one of claims 1 to 8, wherein there are at least two peaks derived from glass transition in a temperature-loss tangent (tanδ) curve obtained by dynamic viscoelasticity measurement of the molded product observed in a temperature range of -80°C to +20°C.

**10.** The molded product according to claim 9, wherein at least one of the peaks derived from glass transition is observed in a temperature range of -50°C or lower, and at least one of the peaks derived from glass transition is observed in a temperature range of -40°C or higher.

**11.** The molded product according to any one of claims 1 to 10, wherein a value of a ratio of the parameter A with respect to the parameter B (A/B) is 0.65 or less.

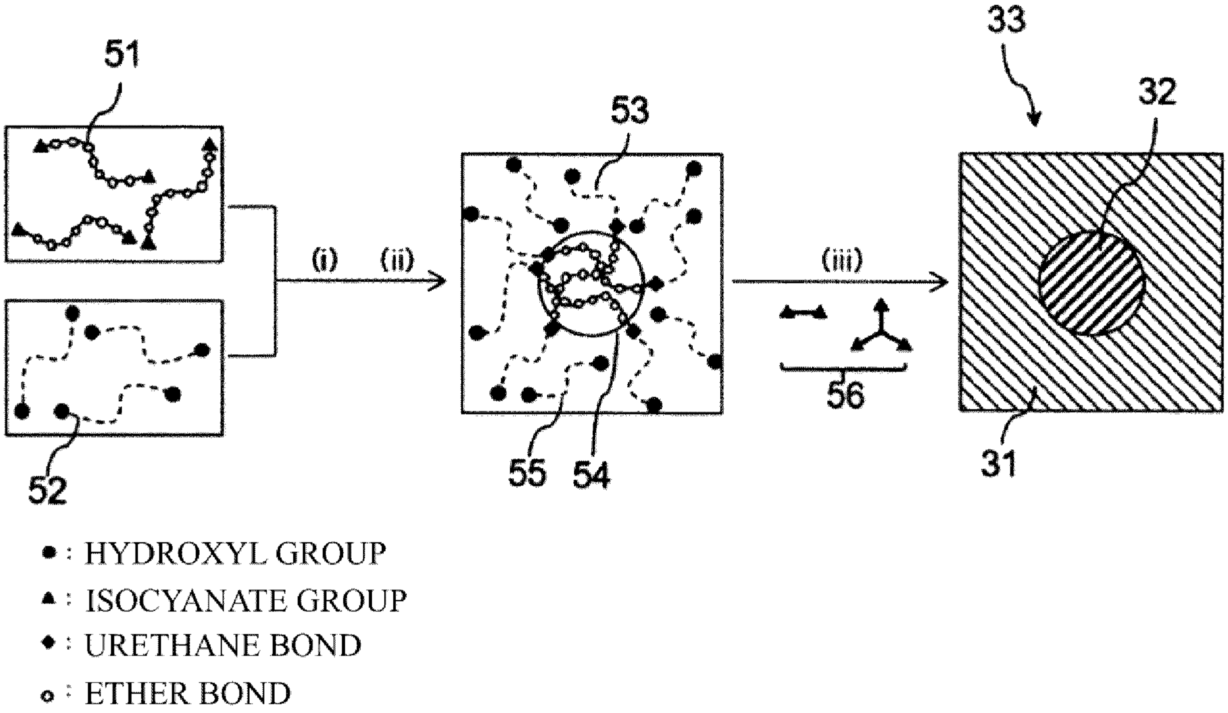
51
52
53
(i) (ii)
(iii)
55 54
56
33
32
31
●: HYDROXYL GROUP
▲: ISOCYANATE GROUP
◆: URETHANE BOND
○: ETHER BOND

Fig. 1

## INTERNATIONAL SEARCH REPORT

International application No.
**PCT/JP2023/038324**

**A. CLASSIFICATION OF SUBJECT MATTER**

***C08J 5/00***(2006.01)i; ***C08G 18/08***(2006.01)i; ***C08G 18/44***(2006.01)i; ***C08K 3/04***(2006.01)i; ***C08L 75/04***(2006.01)i; ***G03G 15/00***(2006.01)i; ***H01B 1/24***(2006.01)i
FI: C08J5/00 CFF; C08G18/08 038; C08G18/44; C08K3/04; C08L75/04; G03G15/00 551; H01B1/24 Z

According to International Patent Classification (IPC) or to both national classification and IPC

**B. FIELDS SEARCHED**

Minimum documentation searched (classification system followed by classification symbols)

C08J5/00-5/02;5/12-5/22; C08G18/00-18/87; C08K; C08L; G03G15/00; H01B1/24

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-67946 A (CANON KK) 30 April 2021 (2021-04-30)<br>entire text | 1-11 |
| A | JP 10-111599 A (KANEGAFUCHI CHEM IND CO LTD) 28 April 1998 (1998-04-28)<br>entire text | 1-11 |
| A | JP 2014-228597 A (BANDO CHEMICAL IND) 08 December 2014 (2014-12-08)<br>entire text | 1-11 |
| P, A | WO 2022/230638 A1 (CANON KK) 03 November 2022 (2022-11-03)<br>entire text | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 January 2024** | **16 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2023/038324**

| Patent document cited in search report | Publication date (day/month/year) | Patent family member(s) | Publication date (day/month/year) |
|---|---|---|---|
| JP 2021-67946 A | 30 April 2021 | US 2022/0244673 A1<br>WO 2021/075532 A1<br>CN 114556230 A | |
| JP 10-111599 A | 28 April 1998 | (Family: none) | |
| JP 2014-228597 A | 08 December 2014 | (Family: none) | |
| WO 2022/230638 A1 | 03 November 2022 | JP 2022-168830 A | |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP H02196836 B
- JP 2014228597 A
- JP 2022170591 A
- JP 2023175847 A


### Non-patent literature cited in the description


- *IEEE Transactions on SYSTEMS, MAN, AND CYBERNETICS*, January 1979, vol. SMC-9 (1), 62-66